# EUROPEAN PATENT SPECIFICATION

(11) **EP 4 045 160 B1**
(45) Date of publication and mention of the grant of the patent: **24.09.2025**
(21) Application number: 20876119.7
(22) Date of filing: 09.10.2020
(51) Int. Cl.: A63C 5/056

(54) **BASE COATING FOR A SKI**
GRUNDBESCHICHTUNG FÜR EINEN SKI
REVÊTEMENT DE BASE DESTINÉ À UN SKI

(30) Priority: 16.10.2019 FI 20194135 U
(43) Date of publication of application: 24.08.2022
(73) Proprietor: Peltonen Ski Oy, 18130 Heinola (FI)
(72) Inventor: PARKKONEN, Antero, 53500 Lappeenranta (FI); JÄRVINEN, Tuula, 54300 Lappeenranta (FI)
(74) Representative: Papula Oy
(86) International application number: PCT/FI2020/050666
(87) International publication number: WO 2021/074487

(56) References cited:
- WO-A1-03/093388
- WO-A1-03/093388
- DE-U1- 202006 008 755
- JP-A- 2007 077 381
- JP-A- H01 317 763
- JP-A- H01 317 763
- US-A- 4 787 991

## Description

### FIELD OF THE INVENTION

The invention relates to a base coating for a ski as defined in claim 1.

### BACKGROUND OF THE INVENTION

Different base materials and coatings arranged to a ski base are previously known, which base materials and coatings may be fixedly or releasably arranged to the ski base or which may be rubbed to the ski base. Further, different glide and grip waxes for waxing skis are previously known. So-called traditional glide and grip wax products are known, which glide and grip wax products are applied to the ski base in grip or glide zones. Further, different glide wax tape products, grip tape products and instant grip products are known.

A problem with the known grip waxes is that the grip wax must be selected according to temperature. To avoid problems during skiing, the skis must be grip waxed again for all skiing conditions, normally even at intervals of four degrees of temperature; soft for mild and hard for cold skiing conditions. The known grip tapes work in a broader temperature range. The grip waxes and grip products are arranged to a so-called grip zone of the ski in the middle part of the ski base for providing the grip. A problem with the grip products and grip waxes applied to the ski base has been so-called sticking of the ski and lack of gliding properties during skiing.

Also the known glide waxes are selected according to temperature and skiing conditions.

A further problem with known waxes is poor wear resistance of the waxes. Especially the soft waxes are easily worn off from the ski base. At the same time, the waxes wearing off from the ski base soil the ski trails during skiing, and the wax residues accumulate over years in the ground at the same ski tracks.

From WO 03/093388 is known a composition for surface treatment capable of imparting surface properties excellent in water repellency and lubricity. Further, JP H01 317763 and JP 2007 077381 discloses some sliding surfaces and skiing waxes.

### OBJECT OF THE INVENTION

An object of the invention is to introduce a new type of coating arranged to a ski base and providing better skiing properties than before. Further, an object of the invention is to introduce a new type of coating for improving simultaneous glide and grip properties of a ski base. Further, an object of the invention is to facilitate and speed up the preparation of a ski for use without separate grip and glide waxing, to reduce the effect of temperature on the grip and glide, and to prevent the wearing of the coating from the ski base. Further, an object of the invention is to arrange the coating to the ski base already in the ski manufacturing stage.

### SUMMARY OF THE INVENTION

The base coating for a ski according to the invention is characterized by features presented in the claims.

The base coating for a ski, which base coating is arranged to the ski base, comprises at least two components.

### DETAILED DESCRIPTION OF THE INVENTION

The base coating for a ski according to the invention contains at least a first component which is a polytetrafluoroethylene (PTFE) based component, such as a teflon based component, and a second component which mainly consists of a binder in the form of a water-dispersion and which contains polytetrafluoroethylene particles. By means of the binder, polytetrafluoroethylene is attached to the ski base.

The invention is based on a principle of providing a continuous coating, having at the same time good glide and grip properties, to the ski base and maintaining the glide and grip properties of the ski at all temperatures and in all skiing conditions without the wearing of wax from the ski base.

In this context, the skis refer to any skis or corresponding sports or recreational equipment used on snow, and to different kinds of runners of instruments or equipment moving on snow.

In one embodiment the polytetrafluoroethylene (PTFE) based component is formed from a polytetrafluoroethylene composition which may be in the form of a mixture, a solution or a dispersion. In one embodiment the first component consists mainly of the polytetrafluoroethylene composition. In one embodiment the first component consists solely of the polytetrafluoroethylene composition. In one embodiment the first component contains more than 98 w-% of the polytetrafluoroethylene composition. In one embodiment the first component contains 100 w-% of the polytetrafluoroethylene composition. In one embodiment the first component contains, in addition to the polytetrafluoroethylene composition, a minor amount of other constituents, e.g. additives and/or fillers. In one embodiment the polytetrafluoroethylene composition contains, in addition to polytetrafluoroethylene, fillers, additives, a solvent and/or water. In one embodiment the polytetrafluoroethylene composition contains, in addition to polytetrafluoroethylene, at least water. In one embodiment the polytetrafluoroethylene composition contains, in addition to polytetrafluoroethylene, water. In one embodiment the polytetrafluoroethylene composition contains, in addition to polytetrafluoroethylene, water and/or a solvent.

In one embodiment the second component consists mainly of a binder and contains a minor amount of polytetrafluoroethylene particles. In one embodiment the second component contains 1 - 5 w-% of polytetrafluoroethylene particles, in one embodiment 2 - 4 w-%. In one embodiment the polytetrafluoroethylene particles are in a powdery or pulverized form, consisting of small particles. Preferably, binders which are environmentally friendly are used. According to the invention, the binder is an aqueous dispersion, i.e. The binder is in the form of a water-dispersion when the base coating composition is being formed. In one embodiment the binder contains acrylate, acryl and/or urethane compounds.

In one embodiment the proportion of the first and the second component in the base coating is at least 96 w-%, in one embodiment at least 97 w-%, in one embodiment at least 98 w-%, and in one embodiment at least 99 p-%. In one embodiment the proportion of the first and the second component in the base coating is 96 - 100 w-%. In one embodiment the proportion of the first and the second component in the base coating is approximately 100 w-%.

According to the invention, the base coating contains less than 40 w-% of the first polytetrafluoroethylene based component In one embodiment the base coating contains 35 - 40 w-% of the first component, and in one embodiment 37 - 39 w-%.

According to the invention, the base coating contains more than 55 w-% of the second component, in one embodiment 55 - 65 w-%. In one embodiment the base coating contains 58 - 62 w-% of the second component.

In one embodiment the base coating contains 36 - 40 w-% of the first component and 58 - 62 w-% of the second component, such that the proportion of the first and the second component in the base coating is at least 97 w-%.

In one embodiment the base coating may contain fillers or suitable additives in addition to the first and the second components. The fillers and additives may be any substances known per se in the art and suited for the intended use, preferably environmentally friendly substances. In one embodiment the base coating contains, as an additive, an additive preventing the sticking of snow, in one embodiment 2 - 4 w-% and in one embodiment approximately 2 w-%.

In one embodiment the composition of the base coating is formed by adding polytetrafluoroethylene particles to the second component and by mixing the first component with the second component which is in the form of a water-dispersion.

In one embodiment the composition of the base coating may be in a liquid, i.e. fluid, e.g. dispersion, form or in a solid form, preferably in a creamy or waxy form, before applying it to the ski base.

The base coating may be arranged in a zone of a desired length and width at the ski base. The base coating may be arranged to the whole area of the ski base. The layer thickness of the base coating may be adjusted steplessly. The base coating also works with a thin layer thickness. In one embodiment the base coating is arranged to the whole area of the ski base. In one embodiment the base coating is arranged to the ski base in a predetermined zone which is smaller than the whole ski base.

In one embodiment the base coating is arranged to a desired area at the ski base already at the factory in connection with the manufacture of the ski or as part of the base material of the ski. In one embodiment the base coating is arranged to the ski base after the manufacture of the ski, e.g. in a separate work stage or in a sports shop.

In one embodiment the base coating composition is applied to a desired area of the ski base at room temperature. In one embodiment the base coating applied to the ski base is allowed to dry and the surface is smoothed, after which the ski is ready for use. In one embodiment, dirt is removed from the ski base before applying the base coating composition to the ski base.

The base coating according to the invention may be used as a coating arranged to a ski base, such as a permanent coating or part of a base coating of a ski.

The base coating for a ski according to the invention has significant advantages compared to the prior art. By means of the invention, the ski base may be provided with a continuous coating which works, better than before, at the same time as a glide and a grip coating and which replaces separate waxing of the ski.

The composition according to the invention works for glide and grip purposes, and by means of the composition a good glide and grip are provided without affecting negatively the other working properties of the ski. The base coating according to the invention provides a water-repellent surface, whereby water drops are assembled as small round droplets against the surface, forming under the ski from the water drops a bearing-like surface over which the ski glides. The smaller the contact surface of the water drop against the ski base, the better the ski glides. When pressure increases on the ski, the water drops are broken and provide a suction effect and as a result the ski gives grip. Correspondingly, as the pressure is released on the ski, the ski goes up and easily starts gliding due to the reconstructed bearing-like surface. Temperature does not affect the properties of the base coating according to the invention. The coating according to the invention does not freeze in any conditions and also works in so-called problem conditions, such as zero-degree conditions.

Further, the base coating according to the invention is very wear-resistant. The base coating wears very well at the ski base, and does not wear away during skiing and does not dissolve in water. Thus the base coating is also environmentally friendly, because it stays on to the ski base and no detrimental constituents come off or dissolve from it into the environment.

By means of the invention a completely maintenance-free ski is provided and once the ski has been treated, it is always ready for skiing in all conditions. The skis need not be waxed before a ski trip. The base coating according to the invention works in the skis in any conditions and weathers and for any user group.

### EXAMPLES

The invention will be described in the following by way of detailed examples of its embodiments.

### Example 1

In this example the base coatings according to the invention were formed continuously to the whole area of ski bases. The glide and grip properties of the skis were examined in test skiing situations.

The base coating contained a first component which is a polytetrafluoroethylene (PTFE) based component, and a second component which consists of a binder and which contains polytetrafluoroethylene particles. Some of the base coatings also contained a minor amount of an additive preventing the sticking of snow. The purpose of the binder is to attach the polytetrafluoroethylene to the ski base.

The first component contained a polytetrafluoroethylene composition which was in the form of a dispersion. The base coating contained approximately 38 w-% of the first component. The second component contained a binder which was an acrylate based water-dispersion and a minor amount of polytetrafluoroethylene particles. The base coating contained approximately 60 w-% of the second component, and the second component contained approximately 3 w-% of polytetrafluoroethylene particles. The polytetrafluoroethylene particles were in a pulverized form, containing small particles. Further, some of the tested base coatings contained approximately 2 w-% of an additive preventing the sticking of snow. Alternatively, the base coating does not need to contain at all the additive preventing the sticking of snow, whereby the ratio of the first component to the second component remained unchanged in the base coating.

In preliminary tests, different base coating compositions were prepared, in which base coating compositions the mutual proportions and compositions of the first and the second components varied. On the basis of these preliminary tests, the above-mentioned composition was found to be the best.

In the formation of the base coating for the ski base, the polytetrafluoroethylene particles were added to the second component of the base coating, which second component was in the form of the water-dispersion, and the first component was mixed with the second component for forming a liquid composition. Surface tension and dirt were removed from the ski base and the formed base coating composition was applied to the whole area of the ski base at room temperature. The base coating applied to the ski base was allowed to dry and the surface was smoothed, after which the ski was ready for use.

In the tests, the skis treated with the base coatings were tested in different skiing situations and weather conditions. As a result of the tests it was surprisingly found that all skis treated with the base coatings according to the invention worked very well in all ranges of conditions. In the tests it was found that a combined effect of the first component and the second component provides very good skiability, i.e. glide and grip.

The base coating according to the invention is suitable for use as different embodiments at the base of any kinds of skis for any kinds of conditions.

The invention has been described above by way of example without limiting the invention in any way merely to the compositions presented herein. Different embodiments of the invention are possible within the scope defined by the claims.

## Claims

1. A base coating for a ski, the base coating containing at least a first component which is a polytetrafluoroethylene based component, and a second component
**characterised in that**,
the second component mainly consists of a binder in the form of a water-dispersion and which contains polytetrafluoroethylene particles, and the base coating contains less than 40 w-% of the first component and more than 55 w-% of the second component.

2. The base coating according to claim 1, **characterized in that** the proportion of the first and the second component in the base coating is at least 96 w-%.

3. The base coating according to claim 1 or 2, **characterized in that** the binder contains an acrylate, acryl and/or urethane compounds.

4. The base coating according to any one of claims 1 - 3, **characterized in that** the base coating contains 55 - 65 w-% of the second component.

5. The base coating according to any one of claims 1 - 4, **characterized in that** the second component contains 1 - 5 w-% of polytetrafluoroethylene particles.

## Patentansprüche

1. Belagbeschichtung für einen Ski, wobei die Belagbeschichtung wenigstens eine erste Komponente enthält, die eine Komponente auf Basis von Polytetrafluorethylen ist, und eine zweite Komponente, **dadurch gekennzeichnet, dass** die zweite Komponente im Wesentlichen aus einem Binder in der Form einer Wasserdispersion besteht, die Polytetrafluorethylenpartikel enthält, und die Belagbeschichtung weniger als 40 Gewichts-% der ersten Komponente und mehr als 55 Gewichts-% der zweiten Komponente enthält.

2. Belagbeschichtung nach Anspruch 1, **dadurch gekennzeichnet, dass** der Anteil der ersten und der zweiten Komponente in der Belagbeschichtung wenigstens 96 Gewichts-% ist.

3. Belagbeschichtung nach Anspruch 1 oder 2, **dadurch gekennzeichnet, dass** der Binder ein Acrylat, Acryl und/oder Urethan-Verbindungen enthält.

4. Belagbeschichtung nach einem der Ansprüche 1 bis 3, **dadurch gekennzeichnet, dass** die Belagbeschichtung 55 bis 65 Gewichts-% der zweiten Komponente enthält.

5. Belagbeschichtung nach einem der Ansprüche 1 bis 4, **dadurch gekennzeichnet, dass** die zweite Komponente 1 bis 5 Gewichts-% von Polytetrafluorethylenpartikeln enthält.

## Revendications

1. Revêtement de base pour un ski,
le revêtement de base contenant au moins un premier composant qui est un composant à base de polytétrafluoroéthylène, et un deuxième composant
**caractérisé en ce que**,
le deuxième composant consiste principalement en un liant sous forme d'une dispersion aqueuse et qui contient des particules de polytétrafluoroéthylène, et le revêtement de base contient moins de 40 % en poids du premier composant et plus de 55 % en poids du deuxième composant.

2. Revêtement de base selon la revendication 1, **caractérisé en ce que** la proportion du premier et du deuxième composant dans le revêtement de base est d'au moins 96 % en poids.

3. Revêtement de base selon la revendication 1 ou la revendication 2, **caractérisé en ce que** le liant contient des composés acrylate, acrylique et/ou uréthane.

4. Revêtement de base selon l'une quelconque des revendications 1 à 3, **caractérisé en ce que** le revêtement de base contient 55 à 65 % en poids du deuxième composant.

5. Revêtement de base selon l'une quelconque des revendications 1 à 4, **caractérisé en ce que** le deuxième composant contient 1 à 5 % en poids de particules de polytétrafluoroéthylène.
